# DEMANDE DE BREVET EUROPEEN

(11) **EP 0 784 324 A1**
(43) Date de publication de la demande: **16.07.1997**
(21) Numéro de dépôt: 97400043.2
(22) Date de dépôt: 09.01.1997
(51) Int. Cl.: G11B 33/04

(54) **Boîtier de disque, notamment boîtier de disque compact intégrant un récepteur radio, notamment FM**

(30) Priorité: 09.01.1996 FR 9600155
(71) Demandeur: X Diffusion, 92403 Courbevoie Cedex (FR)
(72) Inventeur: Wolff, Jacques-Hervé, 92403 Courbevoie Cedex (FR); Bovy, Jean-Marc, 92403 Courbevoie Cedex (FR)
(74) Mandataire: Jacquard, Philippe Jean-Luc

(57) **Abrégé**

L'invention concerne un boîtier de disque, notamment boîtier pour disque compact, du type comportant une base, un intercalaire (2) présentant un logement (29) pour recevoir un disque et un couvercle articulé sur la base au voisinage d'un bord, dit bord d'articulation de la base, ledit intercalaire (2) présentant un rebord (21) jouxtant ledit bord d'articulation de la base. Il comporte un récepteur radio (50) notamment FM, disposé dans un logement (26) situé entre ledit rebord (21, 22, 23) et le fond (28) de la base.

## Description

La présente invention a pour objet un boîtier de disque, notamment pour disque compact audio, CD-ROM, CDI, etc..., du type comprenant une base, un intercalaire présentant un logement pour recevoir un disque, et un couvercle articulé sur la base au voisinage d'un bord, dit bord d'articulation, de la base.

Ce type de boîtier a été utilisé depuis le début de la mise dans le commerce des disques compacts audio (CD-audio).

Jusqu'à présent, ces boîtiers ont fait l'objet de peu de modifications et en particulier, ils ont été utilisés essentiellement pour leur fonction première, à savoir recevoir un disque, une jaquette et un livret d'accompagnement.

L'invention se propose de conférer à ce boîtier une fonction différente qui pourrait être mise à profit dans des buts par exemple ludiques ou publicitaires.

L'idée de base de l'invention est d'incorporer au boîtier un récepteur radio tel qu'un récepteur FM.

L'invention concerne ainsi un boîtier de disque notamment un boîtier pour disque compact, du type comportant une base, un intercalaire présentant un logement pour recevoir un disque et un couvercle articulé sur la base au voisinage d'un bord, dit bord d'articulation de la base, ledit intercalaire présentant un rebord jouxtant ledit bord d'articulation de la base, caractérisé en ce qu'il comporte un récepteur radio notamment FM disposé dans un logement situé entre ledit rebord et le fond de la base.

Le boîtier est avantageusement caractérisé en ce que ledit rebord présente une première région, ladite première région longeant ledit bord d'articulation et s'étendant entre celui-ci et un bord interne et délimitant une première région dudit logement ayant une première hauteur, ainsi qu'une deuxième et une troisième régions délimitant respectivement une deuxième et une troisième régions dudit logement en communication avec la première région du logement et ayant une deuxième hauteur inférieure à la première hauteur, et en ce que le récepteur FM est disposé en majeure partie dans la première région dudit logement.

Il est particulièrement avantageux que le récepteur FM comporte une unité d'alimentation par exemple une pile et une unité de réception par exemple un récepteur à circuit intégré et qu'au moins l'unité de réception soit entièrement disposée dans la première région dudit logement. Le boîtier peut être alors caractérisé en ce que l'unité d'alimentation est au moins en partie disposée dans l'une des deuxième et troisième régions dudit logement.

Le boîtier peut être en particulier caractérisé en ce qu'il il comporte un support tel qu'un circuit imprimé sur lequel sont montés des composants constituant le récepteur radio, notamment FM.

Selon un mode de réalisation préférentiel, ledit support est solidaire de l'intercalaire. Ceci permet en particulier de faciliter le montage du récepteur qui est dissimulé entre l'intercalaire et la jaquette.

Le boîtier peut être en particulier caractérisé en ce que ladite base présente un premier perçage permettant le passage d'un connecteur de casque du type "jack".

Le boîtier peut être en particulier caractérisé en ce que ladite base présente un deuxième perçage permettant le passage d'une clé de réglage de la fréquence de réception du récepteur radio, notamment FM.

Le boîtier peut éventuellement comporter un connecteur femelle pour un casque comportant une première connexion de raccordement des écouteurs du casque à une sortie de signal du récepteur FM, et une deuxième connexion de raccordement d'un fil du casque à une prise d'antenne du récepteur radio, notamment FM.

Le boîtier peut éventuellement comporter un interrupteur arrêt/marche actionné par le raccordement d'un connecteur de casque.

L'invention sera mieux comprise à la lecture de la description qui va suivre, donnée à titre d'exemple non limitatif, en liaison avec les dessins, dans lesquels :
- la figure 1 représente une vue en perspective d'un boîtier standard de disque compact en position ouverte ;
- la figure 2 représente, en vue de dessous et en perspective, un intercalaire auquel est incorporé un récepteur radio, selon un mode de réalisation préféré de l 'invention ;
- la figure 3 représente en vue de dessous et en perspective une base de boîtier modifié de manière à recevoir un intercalaire pourvu d'un récepteur FM selon la figure 2 ;
- et la figure 4 est un schéma électrique d'un récepteur FM miniature susceptible d'être disposé dans un boîtier de disque compact, conformément à la présente invention, mettant en oeuvre un circuit intégré PHILIPS TDA 7021T ou similaire.

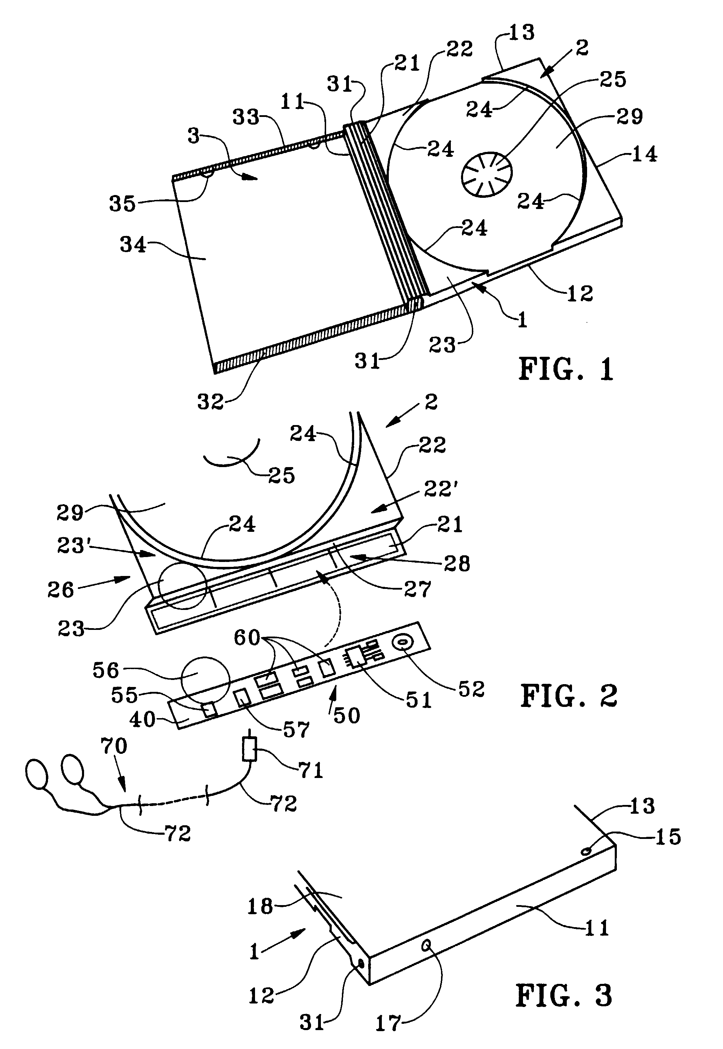

La figure 1 représente un boîtier standard pour CD, CD-ROM, CDI (etc...) en position ouverte. Il comporte une base 1 présentant un fond 18 et des bords 11, 12, 13 et 14 délimitant avec le fond 18 un logement pour un intercalaire 2 présentant un logement 29 pour un disque qui est maintenu par des griffes centrales 25 et dont le pourtour est délimité par des secteurs circulaires 24.

Le boîtier est fermé par un couvercle 3 articulé en 31 au voisinage du bord 11, dit bord d'articulation. En position fermée, les bords 32 et 33 du couvercle 3 longent extérieurement les bords latéraux 12 et 13 de la base 1 et la face interne 34 du couvercle 3 vient recouvrir le disque mis en boîtier. Le couvercle reçoit un livret qui y est maintenu par des pattes 35. Une jaquette dont la dorsale est imprimée est mise en place avant l'intercalaire 2 et recouvre le fond 18 et remonte le long de la partie interne des bords opposés 11 et 14 de la base 1.

Comme le montre plus particulièrement la figure 2, l'intercalaire 2 comporte un rebord 21, 22, 23 à deux niveaux. Le rebord comporte d'une part deux régions 22 et 23 dont le niveau est plus haut que le fond du logement 29, en raison de la présence des bords 24, ce qui définit deux régions 22' et 23' délimitées par les méplats 22 et 23 et le fond 18 de la base 1, et d'autre part une région 21 longeant le bord 11 et se raccordant aux méplats 22 et 23 par un bord interne incliné 27 s'étendant sur toute la longueur du bord 11, ce qui définit une région 28 délimitée par la face plane 21 et le fond 18, la région 28 du logement ayant une hauteur supérieure à celle des régions 22' et 23' qui communiquent avec elle pour former le logement 26.

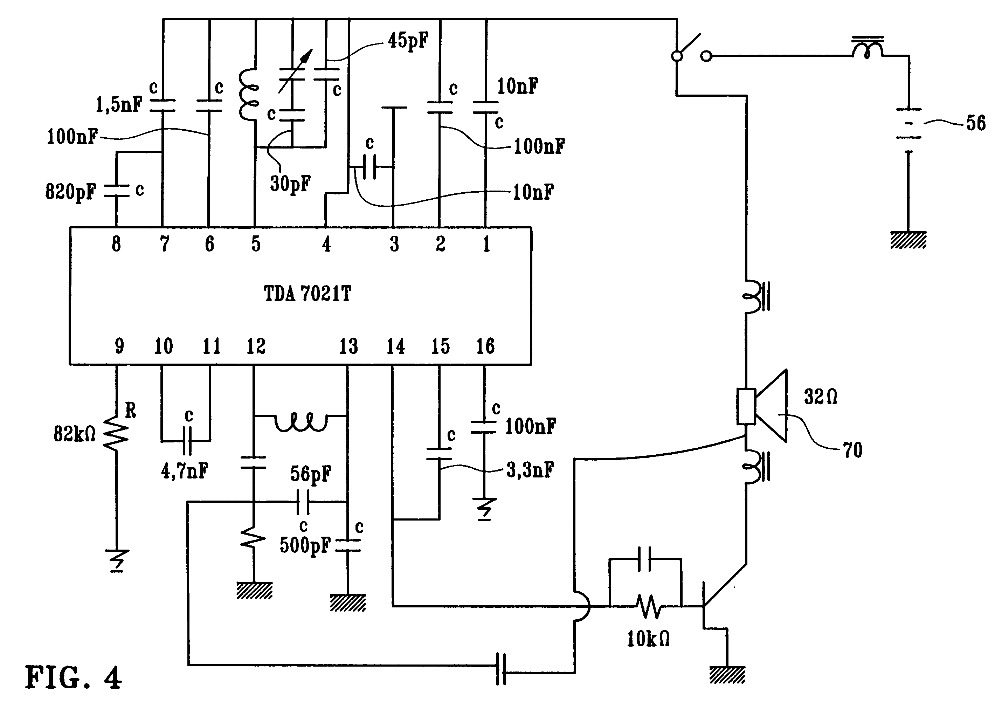

Dans la région la plus haute (28) du logement 26, on dispose un récepteur FM miniature comportant un circuit imprimé 40 sur lequel ont été implantés les composants nécessaires notamment un circuit intégré 51 par exemple un circuit TDA 7021T de PHILIPS et les composants annexes (voir schéma à la figure 4).

Les composants annexes sont des résistances, des selfs, des condensateurs, désignés par le repère général 60, un circuit d'accord 52 et un connecteur 57 pour la prise "jack" 71 d'un casque 70. Une pince de connexion 55 est en outre prévue pour la connexion électrique d'une pile d'alimentation 56, qui est de préférence une pile au lithium. Une telle pile est en effet extra-plate et présente une durée de vie plus élevée que les piles boutons. On utilise par exemple une pile CR 3025 de 3 Volts de chez PANASONIC de diamètre 20 mm et de hauteur 2,38 mm, à comparer aux 52,4 mm de hauteur d'une pile alkaline manganèse de 1,5 V disponible sous forme de pile bouton.

Une pile au lithium telle que celle mentionnée ci-dessus est facilement logée à cheval entre les régions 23' et 28, comme représenté en pointillés à la figure 2.

Le circuit imprimé rectangulaire 40 et ses composants viennent se loger dans la région 28 du logement 26. La hauteur de ce logement est suffisante pour recevoir le composant le plus haut qui est le circuit d'accord 52, en tenant compte de l'épaisseur du circuit imprimé 40.

On utilise en général un circuit imprimé 40 simple face dont les métallisations font de préférence face au bord 27, de sorte que, dans le mode de représentation de la figure 1, les composants 51, 52, 55, 57 et 60 sont dirigés "tête en bas".

Cette disposition présente plusieurs avantages :
- d'une part, elle permet de fixer facilement le circuit imprimé 40 sur la face plane 21 par exemple par collage ;
- d'autre part, elle permet un montage aisé des éléments du boîtier, en n'interférant pas avec le montage de la jaquette ;
- elle évite toute modification de l 'intercalaire ;
- enfin, la pile 56 peut être facilement changée en soulevant l'intercalaire et en la dégageant de la pince 55.

La seule modification du boîtier standard qui s'avère nécessaire est le percement d'un trou 17 dans le bord 11 pour permettre d'insérer la prise "jack" d'un casque d'écoute de préférence miniature 70, et éventuellement d'un trou 15 dans le fond 18 pour le passage d'un accessoire de réglage du circuit d'accord 52 (tournevis miniature) pour effectuer un changement de station ou de fréquence. Ces deux trous peuvent être réalisés simultanément sur un même poste automatisé.

Les trous 15 et 17 sont disposés en face de régions correspondantes de la jacquette qui peuvent être pré-percées, ou de préférence laissées vierges, ce qui fournit une indication de non utilisation préalable.

Le récepteur FM est en général livré pré-réglé sur une station, par exemple une station sur laquelle émet le producteur de vidéogramme contenu dans le boîtier, ou que celui-ci souhaite promouvoir. Une recherche automatique de fréquence (scanning) peut être également envisagée selon la préférence du client.

Une simplification remarquable de mise en oeuvre est obtenue par le fait que l'enfoncement de la prise "jack" 71 peut être mise à profit pour déclencher diverses fonctions telles que la mise en route du récepteur (par exemple à l'aide d'un contacteur à lame). En outre, le casque 70 peut être d'un type selon lequel le fil 72 est susceptible de servir d'antenne, la connexion d'antenne étant également obtenue par la connexion du connecteur 71.

## Revendications

1. Boîtier de disque, notamment boîtier pour disque compact, du type comportant une base, un intercalaire présentant un logement pour recevoir un disque et un couvercle articulé sur la base au voisinage d'un bord, dit bord d'articulation de la base, ledit intercalaire présentant un rebord jouxtant ledit bord d'articulation de la base, caractérisé en ce qu'il comporte un récepteur radio (50) notamment FM, disposé dans un logement (26) situé entre ledit rebord (21, 22, 23) et le fond (28) de la base (1).

2. Boîtier selon la revendication 1, caractérisé en ce que ledit rebord (21, 22, 23) présente une première région (21), ladite première région (21) longeant ledit bord d'articulation (11) et s'étendant entre celui-ci et un bord interne (27) et délimitant une première région (28) dudit logement ayant une première hauteur, ainsi qu'une deuxième (22) et une troisième (23) régions délimitant respectivement une deuxième (22') et une troisième (23') régions dudit logement (26), en communication avec la première région (28) dudit logement (26) et ayant une deuxième hauteur inférieure à la première hauteur, et en ce que le récepteur radio (50) est disposé en majeure partie dans la première région (28) dudit logement (26).

3. Boîtier selon la revendication 2, caractérisé en ce que le récepteur radio (50, 56) comporte une unité d'alimentation (56) et une unité de réception (50) et en ce qu'au moins l'unité de réception (50) est entièrement disposée dans la première région (28) dudit logement (26).

4. Boîtier selon la revendication 3, caractérisé en ce que l'unité d'alimentation (56) est au moins en partie disposée dans l'une des deuxième (22') et troisième (23') régions dudit logement (26).

5. Boîtier selon une des revendications précédentes, caractérisé en ce qu'il comporte un support (40) tel qu'un circuit imprimé sur lequel sont montés des composants constituant le récepteur radio.

6. Boîtier selon la revendication 5, caractérisé en ce que ledit support (40) est solidaire de l'intercalaire (2).

7. Boîtier selon une des revendications précédentes, caractérisé en ce que ladite base (1) présente un premier perçage (17) permettant le passage d'un connecteur (71) de casque du type "jack".

8. Boîtier selon une des revendications précédentes, caractérisé en ce que ladite base (1) présente un deuxième perçage (15) permettant le passage d'une clé de réglage de fréquence de réception du récepteur radio.

9. Boîtier selon une des revendications précédentes, caractérisé en ce qu'il comporte un connecteur femelle (57) pour un casque (70) comportant une première connexion de raccordement des écouteurs du casque à une sortie de signal du récepteur radio, et une deuxième connexion de raccordement d'un fil du casque à une prise d'antenne du récepteur radio.

10. Boîtier selon une des revendications précédentes, caractérisé en ce qu'il comporte un interrupteur arrêt/marche actionné par le raccordement du connecteur de casque (71).
